# EUROPEAN PATENT APPLICATION

(11) **EP 4 703 899 A1**
(43) Date of publication of application: **04.03.2026**
(21) Application number: 25193602.7
(22) Date of filing: 01.08.2025
(51) Int. Cl.: G06F 16/16

(54) **INFORMATION PROCESSING APPARATUS AND INFORMATION PROCESSING METHOD**

(30) Priority: 02.09.2024 JP 2024150739
(71) Applicant: Toshiba TEC Kabushiki Kaisha, Tokyo 141-8562 (JP)
(72) Inventor: Endo, Koji, Tokyo, 141-8562 (JP)
(74) Representative: Bandpay & Greuter

(57) **Abstract**

An information processing apparatus includes a processor configured to receive a first electronic file, and acquire metadata of a second electronic file. The second electronic file being the same as the first electronic file or being a file generated based on the first electronic file. processor is also configured to transmit the second electronic file and the metadata of the second electronic file based on information associated with linking a type of the metadata and data defined in an external service.

## Description

### FIELD

Embodiments described herein relate generally to an information processing apparatus and an information processing method.

### BACKGROUND

Currently, various companies provide file transfer services as cloud services. The file transfer service performs various kinds of processing on document files uploaded from a multi-function peripheral or a smartphone (e.g., a portable device, a mobile device, etc.). For example, through the file transfer service, metadata, which is document information, can be extracted by performing processing such as optical character recognition (OCR) or barcode recognition on the document file. The file transfer service links the document file with the metadata and stores the file and data in an external storage service.

An integration platform as a service (iPaaS service) is also provided that is capable of creating workflows linked to various services in the world. By registering a connector in the iPaaS service, the company's service can be linked to the iPaaS service. Thereby, the company's services are linked to thousands of services belonging to the iPaaS service.

It can be considered to use the document files and metadata sent from the file transfer service in the workflow on the iPaaS service by connecting the file transfer service to the iPaaS service. Here, it is necessary to define in advance what data to send to the connector of the iPaaS service. However, various types of data to be sent as metadata depending on the customers are used, and it is not easy to define all types of the data in advance. If all representative types of the data are registered, it is not easy for the customer to search for the necessary data from a large volume of data.

To this end, an information processing apparatus, an information processing method, and an information processing apparatus system according to the appended claims are provided.

Preferably, the information processing method is such that the data defined in the external service is universal data, and the information associated with the linking includes information that represents the type of metadata to be linked to the universal data.

Preferably, the information processing method further comprises a step consisting of setting the information associated with the linking based on an operation.

Preferably, the information processing apparatus system is such that the information processing apparatus is further configured to acquire metadata input based on an input operation performed by the user.

Preferably, the information processing apparatus system is such that the information processing apparatus is configured to transmit the second electronic file and the metadata of the second electronic file based on information associated with the linking, the linking information being set in a template selected from a plurality of templates by a user.

### DESCRIPTION OF THE DRAWINGS

FIG. 1 illustrates a block diagram of an outline of an example of a configuration of an information processing system according to an embodiment;
FIG. 2 illustrates a block diagram of an outline of an example of the configuration;
FIG. 3 illustrates a block diagram of an outline of an example of a configuration of a multi-function peripheral;
FIG. 4 illustrates a diagram of an example of universal data;
FIG. 5 illustrates a diagram of an example of a data structure of data stored in a template information storage region;
FIG. 6 illustrates a diagram of an example of a setting screen for linking information displayed on a terminal;
FIG. 7 illustrates a diagram of an example of a setting screen for processing of the information processing apparatus displayed on the terminal;
FIG. 8 illustrates a diagram of an example of an input screen for metadata displayed on the multi-function peripheral;
FIG. 9 illustrates a sequence diagram of an example of a setting for template information; and
FIG. 10 illustrates a sequence diagram of an example of processing for an electronic file.

### DETAILED DESCRIPTION

It is desired to provide a technology that enables metadata necessary for processing of an external service to be transmitted to an external service.

In general, according to one embodiment, an information processing apparatus includes a receiving section (e.g. a receiver, etc.), an acquiring section (e.g., acquirer, etc.), and a transmitting section (e.g., a transmitter, etc.). The receiving section receives a first electronic file. The acquiring section acquires metadata of a second electronic file, which is an electronic file the same as the first electronic file or an electronic file generated on the basis of the first electronic file. The transmission section transmits the second electronic file and the metadata of the second electronic file on the basis of, or based on, information about (e.g., regarding, corresponding to, associated with, etc.) linking a type of the metadata and data defined in an external service.

Hereinafter, several embodiments will be described with reference to drawings. It should be noted that the scale of each section or portion of the apparatus may be changed as appropriate in each drawing used to explain the following embodiments. Further, for the sake of explanation, each drawing used to explain the following embodiments may be given in a state where some configurations are omitted therein.

### Embodiments

### Configuration Example

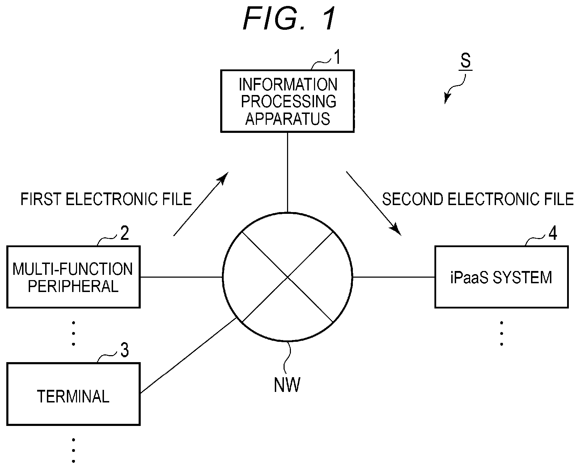

FIG. 1 illustrates a block diagram of an outline of a configuration example of an information processing system S.

The information processing system S is a system for processing electronic files by connecting the file transfer service implemented by the information processing apparatus 1 and the iPaaS service implemented by the iPaaS system 4.

Hereinafter, a person who uses the file transfer service is referred to as a user. A person who manages the connection between the file transfer service and the iPaaS service is referred to as an administrator. The administrator is an example of a person who performs setting for the connection between the file transfer service and the iPaaS service.

The electronic file is any file that is electronically digitized. The electronic file will be described as a document file representing a form, but is not limited thereto. For example, the form may be an application form, an invoice, or an order form, but is not limited thereto. For example, the application form may be an application form for travel expense settlement, but is not limited thereto.

The electronic file will be described as image data generated by scanning a medium such as a sheet with a multi-function peripheral 2, but is not limited thereto. The electronic file may be data including text data generated by an application such as a document generation application using a terminal 3.

The information processing system S includes the information processing apparatus 1, a plurality of multi-function peripherals 2, a plurality of terminals 3, and a plurality of iPaaS systems 4. The information processing system S may include one multi-function peripheral 2 instead of the plurality of multi-function peripherals 2. The information processing system S may include one terminal 3 instead of the plurality of terminals 3. The information processing system S may include one iPaaS system 4 instead of the plurality of systems. For example, each of the plurality of iPaaS systems 4 is an iPaaS system operated by a different operator. The information processing system S is an example of an information processing system including at least two apparatuses among the information processing apparatus 1, the plurality of multi-function peripherals 2, the plurality of terminals 3, and the plurality of iPaaS systems 4.

The information processing apparatus 1, the plurality of multi-function peripherals 2, the plurality of terminals 3, and the plurality of iPaaS systems 4 are connected to each other so as to be able to communicate with each other via a network NW. The network NW includes one or more networks such as the Internet, a mobile communication network, and a local region network (LAN). The LAN may be a wireless LAN or a wired LAN.

The information processing apparatus 1 is an apparatus that implements a file transfer service. The file transfer service includes a service of linking an electronic file to metadata of the electronic file and storing the electronic file in a storage. For example, the information processing apparatus 1 is a server on a cloud.

The metadata is information of an electronic file. For example, the metadata includes various types of information associated with an electronic file, such as a user name, an E-mail address, a company name, a company address, and an amount, but is not limited thereto. The type of metadata includes the item of the metadata or the meaning of the contents.

The information processing apparatus 1 receives a first electronic file from an apparatus such as the multi-function peripheral 2 or the terminal 3 via the network NW. The first electronic file refers to an electronic file that the information processing apparatus 1 receives from an apparatus such as the multi-function peripheral 2 or the terminal 3. The information processing apparatus 1 transmits the second electronic file and the metadata of the second electronic file to the iPaaS system 4 via the network NW. The second electronic file refers to an electronic file that the information processing apparatus 1 transmits to the iPaaS system 4. The second electronic file is an electronic file the same as the first electronic file or an electronic file generated on the basis of the first electronic file.

The multi-function peripheral 2 is a digital multi-function peripheral for collectively utilizing the functions of various office devices. The multi-function peripheral 2 has a scan function of generating an electronic file of a medium by scanning the medium. The multi-function peripheral 2 has a function of printing on the basis of the electronic file generated by the scan function or the electronic file transmitted from the terminal 3. The multi-function peripheral 2 has a function of transmitting the electronic file generated by the scan function to the information processing apparatus 1 via the network NW. For example, the multi-function peripheral 2 is a multi-function peripheral (MFP). The multi-function peripheral 2 is an example of an apparatus that transmits the first electronic file to the information processing apparatus 1 via the network NW. The multi-function peripheral 2 is an example of an apparatus different from the information processing apparatus 1.

The terminal 3 is an apparatus that processes information. Through the terminal 3, an electronic file including text data can be generated using an application such as a word processor. For example, the terminal 3 is a personal computer (PC), a tablet terminal, or a smartphone, but is not limited thereto. The terminal 3 is an example of an apparatus that transmits the first electronic file to the information processing apparatus 1 via the network NW. The terminal 3 is an example of an apparatus different from the information processing apparatus 1.

The iPaaS system 4 is a system that is configured with one or more apparatuses to implement the iPaaS service. The iPaaS service is a service capable of creating a workflow in link with various services. The workflow in the iPaaS service is a series of processing automatically executed in accordance with a flow defined by one service or a combination of a plurality of services.

The iPaaS system 4 is able to process the second electronic file in accordance with the workflow by connecting the file transfer service and the iPaaS service. For example, if the second electronic file is an electronic file representing an invoice, the workflow in the iPaaS service is a workflow for processing the invoice. The iPaaS service is an example of an external service that processes the second electronic file, which is implemented by an apparatus different from the information processing apparatus 1. The external service is a service that processes the second electronic file. The workflow in the iPaaS service is an example of the processing of the iPaaS service performed on the second electronic file.

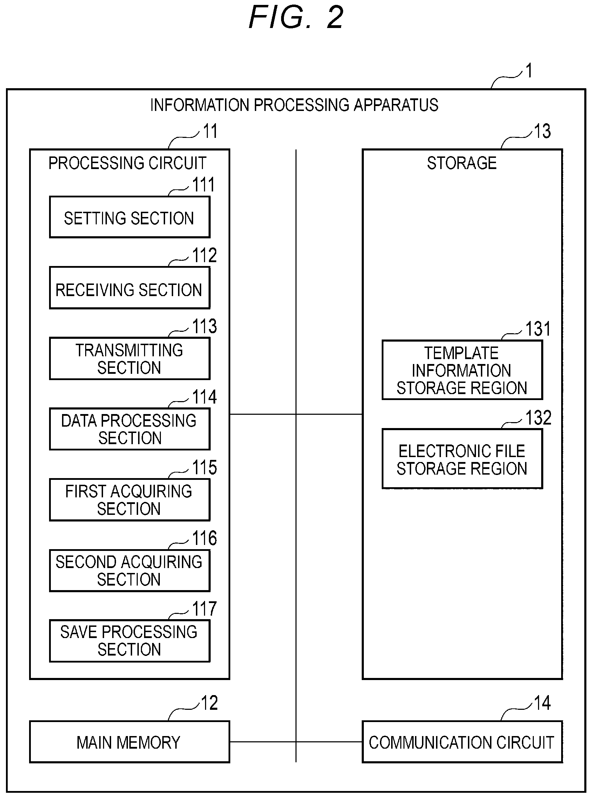

FIG. 2 illustrates a block diagram of an outline of an example of the configuration of the information processing apparatus 1.

The information processing apparatus 1 includes a processing circuit 11, a main memory 12, a storage 13, and a communication circuit 14. The processing circuit 11, the main memory 12, the storage 13, and the communication circuit 14 are connected to each other such that signals can be input to and output from each other.

The processing circuit 11 corresponds to a central portion of the information processing apparatus 1. The processing circuit 11 is an element that constitutes a computer of the information processing apparatus 1. The processing circuit 11 includes one or more circuits that execute a plurality of processing operations using a plurality of functions. For example, the circuit is a processor, an application specific integrated circuit (ASIC), or a field-programmable gate array (FPGA), but is not limited thereto. For example, the processor is a central processing unit (CPU) or a graphics processing unit (GPU), but is not limited thereto. The processing circuit 11 loads a program stored in the main memory 12 or the storage 13 into the main memory 12. The processing circuit 11 executes the program loaded into the main memory 12, thereby enabling various kinds of processing to be executed.

The main memory 12 corresponds to a main storage portion of the information processing apparatus 1. The main memory 12 is an element that constitutes the computer of the information processing apparatus 1. The main memory 12 includes a non-volatile memory region and a volatile memory region. The main memory 12 stores an operating system or a program in the non-volatile memory region. The main memory 12 uses the volatile memory region as a work region in which the processing circuit 11 appropriately rewrites data. For example, the main memory 12 includes a read only memory (ROM) as the non-volatile memory region. For example, the main memory 12 includes a random access memory (RAM) as the volatile memory region.

The storage 13 corresponds to an auxiliary storage portion of the information processing apparatus 1. The storage 13 includes one or more storage devices. For example, the storage device is a semiconductor storage medium such as a hard disk drive (HDD) and a solid state drive (SSD), but is not limited thereto. The storage 13 stores the above-mentioned program, data used by the processing circuit 11 in performing various kinds of processing, and data generated by the processing of the processing circuit 11.

The storage 13 includes a template information storage region 131. The template information storage region 131 stores template information for each template. The template is a template according to the workflow in the iPaaS service. Even if the workflow is the same in the iPaaS service, the template is set for each customer of the file transfer service. The template information storage region 131 is an example of a storage that stores the template information.

The template information is information which is set in the template. The template information is information that represents the contents of the template. The template information may include some or all of title information, processing content information, storage save location information, linking information, and input method information that are associated with each other.

The title information is information that represents the title of the template. The workflow in the iPaaS service may be a workflow for processing an electronic file that represents an application form for travel expense settlement. In such a case, the title of the template may be travel expense settlement.

The processing content information is information that represents at least one processing of the information processing apparatus 1. The processing of the information processing apparatus 1 is processing for the first electronic file executed by the information processing apparatus 1. For example, the processing of the information processing apparatus 1 includes information extraction, file splitting, and the like, but is not limited thereto. The information extraction is processing of extracting metadata from the first electronic file through processing such as OCR or barcode recognition.

File splitting is processing of splitting the first electronic file into a plurality of second electronic files. The information processing apparatus 1 is able to split the first electronic file into the plurality of second electronic files by using a barcode included in the first electronic file as a separator. For example, the first electronic file may be configured with 10 pages of data such that barcodes are included on the third and sixth pages. In the present example, the information processing apparatus 1 splits the first electronic file into three second electronic files. The first file of the second electronic files is a second electronic file configured with data of pages 1-3. The second file of the second electronic files is a second electronic file configured with data of pages 4-6. The third file of the second electronic files is a second electronic file configured with data of pages 7-10.

The save location information is information that represents the save location of the second electronic files. Hereinafter, the notation of "save location" indicates the save location of the second electronic files. For example, the save location is a storage region of an electronic file storage region 132. The save location is set for each template.

The linking information is information about the linking between the type of metadata and the universal data. The linking information may include information that represents the type of metadata linked to the universal data for each universal data. The universal data is data defined in the iPaaS service. For example, the universal data is not data that represents specific contents, but data that represents a generic index, such as data 1. The index includes meaning of a label. Here, ten pieces of universal data, data 1 to data 10, are defined in the iPaaS service.

The metadata necessary for each workflow in the iPaaS service may differ. Even in the same workflow in the iPaaS service, the metadata necessary for each customer of the file transfer service may differ. Therefore, the linking information may differ for each template.

The input method information is information about the input method of the metadata. The input method information may include information that represents an input method of the metadata for each type of metadata linked to the universal data. The input method of the metadata is a method of inputting the metadata to the information processing apparatus 1. The input method of the metadata includes a method of extracting the metadata from the first electronic file through processing such as OCR or barcode recognition. The input method of the metadata includes a method of inputting text to an apparatus such as the multi-function peripheral 2 or the terminal 3.

The storage 13 includes the electronic file storage region 132. The electronic file storage region 132 stores the second electronic file and the metadata of the second electronic file. The storage region for the second electronic file in the electronic file storage region 132 is set for each template. The electronic file storage region 132 is an example of a storage section that stores the second electronic file and the metadata of the second electronic file.

The communication circuit 14 is an interface for inputting or outputting a signal. The communication circuit 14 connects the information processing apparatus 1 to a different apparatus via the network NW such that the information processing apparatus 1 is able to communicate with each other. The communication circuit 14 is an example of a communication section (e.g., a communicator, etc.) of the information processing apparatus 1.

It should be noted that the hardware configuration of the information processing apparatus 1 is not limited to the above-mentioned configuration. The information processing apparatus 1 allows the above-mentioned components to be omitted or changed and new components to be added as appropriate.

Each section implemented by the processing circuit 11 will be described.

The processing circuit 11 implements a setting section (setting interface or setter) 111, a receiving section (receiver) 112, a transmitting section (transmitter) 113, a data processing section (data processor) 114, a first acquiring section (first acquirer or first acquisition processor) 115, a second acquiring section (second acquirer or second acquisition processor) 116, and a save processing section (save processor) 117. Each section implemented by the processing circuit 11 can be referred to as a function.

The setting section 111 sets the template information. The receiving section 112 receives a signal via the network NW. The transmitting section 113 transmits a signal via the network NW. The data processing section 114 processes the first electronic file. The data processing section 114 is an example of a processing section that processes the first electronic file.

The first acquiring section 115 acquires the template information. The first acquiring section 115 is an example of an acquiring section that acquires the template information.

The second acquiring section 116 acquires the metadata of the second electronic file. The second acquiring section 116 is an example of an acquiring section that acquires the metadata of the second electronic file.

The save processing section 117 saves the second electronic file and the metadata of the second electronic file in the electronic file storage region 132.

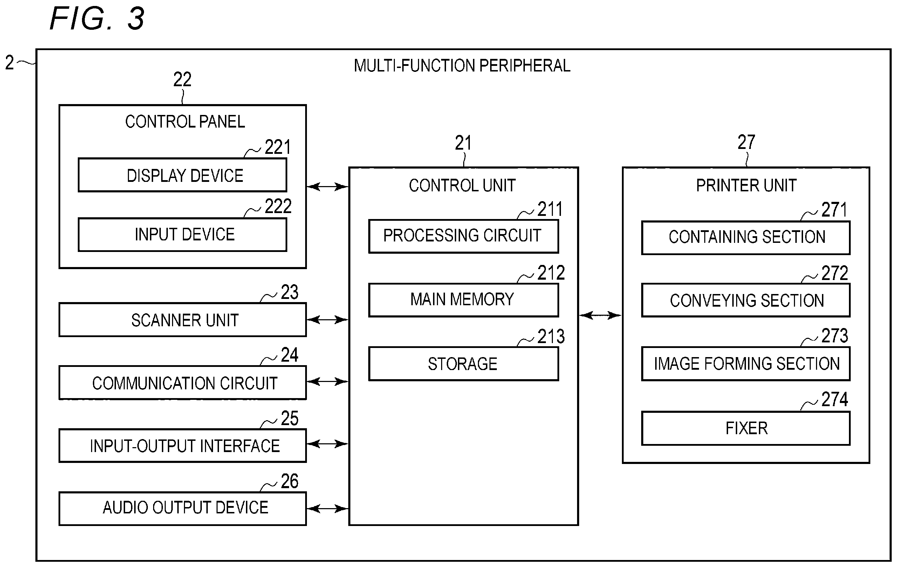

FIG. 3 illustrates a block diagram of an outline of an example of the configuration of the multi-function peripheral 2.

The multi-function peripheral 2 includes a control unit 21 (e.g., controller, etc.), a control panel 22, a scanner unit 23 (e.g., scanner, etc.), a communication circuit 24 (e.g., a communication interface, etc.), an input-output interface 25, an audio output device 26 (e.g., a speaker, etc.), and a printer unit 27 (e.g., a printer, etc.). The control unit 21, the control panel 22, the scanner unit 23 (e.g., scanner etc.), the communication circuit 24, the input-output interface 25, the audio output device 26, and the printer unit 27 are connected to each other so as to be able to input and output signals.

The control unit 21 controls an operation of each section of the multi-function peripheral 2. The control unit 21 includes a processing circuit 211, a main memory 212, and a storage 213.

The processing circuit 211 corresponds to a central portion of the multi-function peripheral 2. The processing circuit 211 is an element that constitutes the computer of the multi-function peripheral 2. The processing circuit 211 includes one or more circuits that execute a plurality of processing operations using a plurality of functions. The processing circuit 211 loads a program stored in the main memory 212 or the storage 213 into the main memory 212. The processing circuit 211 executes the program loaded into the main memory 212, thereby enabling various kinds of processing to be executed. The main memory 212 corresponds to a main storage portion of the multi-function peripheral 2. The main memory 212 is an element that constitutes the computer of the multi-function peripheral 2. The main memory 212 may be configured similarly to the main memory 12. The storage 213 corresponds to an auxiliary storage portion of the multi-function peripheral 2. The storage 213 includes one or more storage devices. The storage 213 stores the above-mentioned program, data used by the processing circuit 211 in performing various kinds of processing, and data generated by the processing in the processing circuit 211.

The control panel 22 includes a display device 221 (e.g., a display, a screen, etc.) and an input device 222. The display device 221 is a device capable of displaying images. The display device 221 is a liquid crystal display or an organic electroluminescence (EL) display, but is not limited thereto. The display device 221 is an example of the display section of the multi-function peripheral 2. The input device 222 is a device capable of inputting instructions based on operations (e.g., a device configured to receive an input from a user and provide the input, etc.). The input device 222 may include a button that can be pressed (e.g., engaged, actuated, etc.). The input device 222 may be a touch panel that is integrated with the display device 221. The input device 222 is an example of the input section of the multi-function peripheral 2.

The scanner unit 23 is a device that reads (e.g., detects, processes.) images such as characters, figures, and photos drawn on the medium by scanning a medium placed at a predetermined position. The scanner unit 23 includes a line sensor. The line sensor may be a charge coupled device (CCD) type. In other embodiments, the line sensor may be a contact image sensor (CIS) type. The scanner unit 23 generates image data based on the images which are read using the line sensor.

The communication circuit 24 is an interface for inputting or outputting (e.g., receiving or providing, etc.) a signal. The communication circuit 24 connects (e.g., communicably couples, etc.) the multi-function peripheral 2 to a different apparatus via the network NW such that the multi-function peripheral 2 is able to communicate therewith.

The input-output interface 25 is an interface for connecting the multi-function peripheral 2 to external apparatuses. The input-output interface 25 includes a connector for a wired cable. For example, the input-output interface 25 may be wirelessly coupled to external apparatuses and/or wired to external apparatuses.

The audio output device 26 is a device capable of outputting (e.g., providing, supplying) audio under the control of the processing circuit 211. For example, the audio output device 26 may be a speaker.

The printer unit 27 is a unit, device or portion of a device for printing (e.g., that is configured to print, etc.). The printer unit 27 includes a containing section 271 (e.g. a container, a receptacle.), a conveying section 272 (e.g., a conveyor), an image forming section 273 (e.g., an image former), and a fixer 274. The containing section 271 contains a sheet. The conveying section 272 conveys the sheet in the printer unit 27. The image forming section 273 forms a toner image on the sheet. The image forming section 273 includes an intermediate transfer belt, a plurality of developing sections, an exposure section, a transfer section, and the like. The fixer 274 applies heat and pressure to the sheet on which the toner image provided by the image forming section 273 is formed. The fixer 274 fixes the toner image formed on the sheet to the sheet by using heat and pressure, thereby forming an image on the sheet.

It should be noted that the hardware configuration of the multi-function peripheral 2 is not limited to the above-mentioned configuration. The multi-function peripheral 2 allows the above-mentioned components to be omitted or changed and new components to be added as appropriate.

### Example of Universal Data

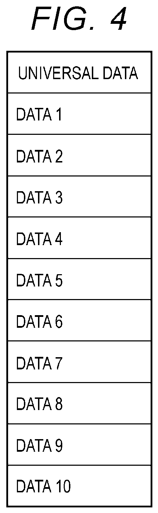

An example of the universal data will be described. FIG. 4 illustrates a diagram of an example of the universal data. For example, the universal data is each of data 1 to data 10 defined in the iPaaS service.

### Example of Template Information

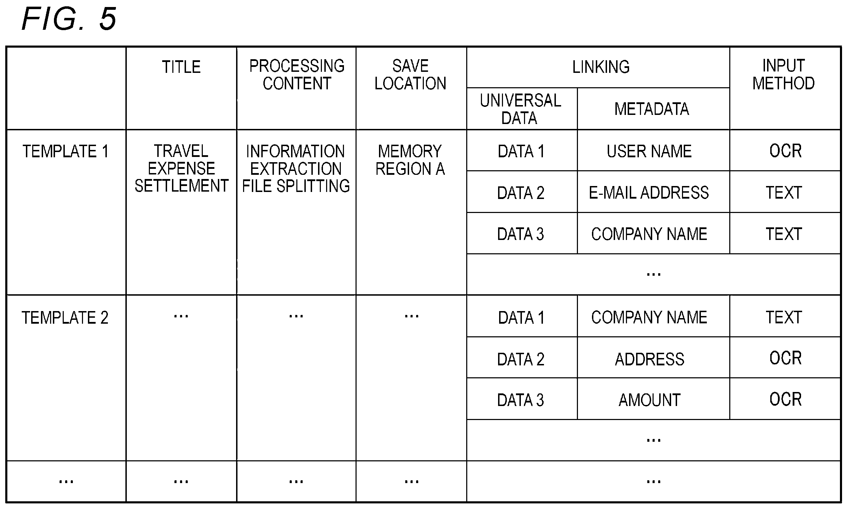

An example of the template information will be described. FIG. 5 illustrates a diagram of an example of a data structure of the data stored in the template information storage region 131. The template information storage region 131 stores the template information for each template (e.g., for a plurality of templates, etc.). The template information includes title information, processing content information, storage save location information, linking information, and input method information that are associated with each other.

Linking information of a template 1 is different from linking information of a template 2. For example, each template includes linking information that can be different than the linking information of each of the other of plurality of templates. For example, the type of metadata linked to the data 1 is a user name in the template 1, but is a company name in the template 2. In such a manner, the type of metadata linked to the same universal data may differ between the templates. For example, an E-mail address linked to the data 2 in the template 1 may not be linked to any universal data in the template 2. In such a manner, the type of metadata linked to any of the universal data in a certain template may not be linked to any universal data in another template.

### Display Example

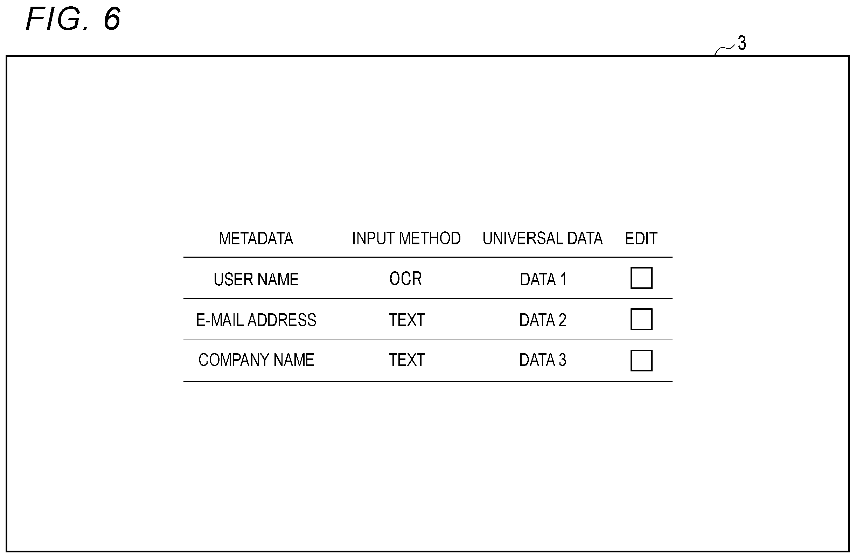

FIG. 6 illustrates a diagram of an example of a setting screen relating to the linking information displayed on the terminal 3.

The display device of the terminal 3 displays the setting screen relating to the linking information.

The setting screen relating to the linking information is a screen on which the administrator is able to input or provide information for setting the linking information on the basis of the operation of the input device of the terminal 3 performed by the administrator. For example, the information for setting the linking information includes information that represents the type of metadata to be linked to the universal data for each universal data.

The setting screen relating to the linking information is also a screen on which the administrator is able to input information for setting the input method information on the basis of the operation of the input device of the terminal 3 performed by the administrator. For example, the setting screen is configured to receive an input from the administrator. For example, the information for setting the input method information includes information that represents the input method of the metadata for each type of metadata.

It should be noted that the display of the setting screen relating to the linking information is not limited to the terminal 3. When the administrator uses the multi-function peripheral 2, the display device 221 of the multi-function peripheral 2 is able to display the setting screen relating to the linking information.

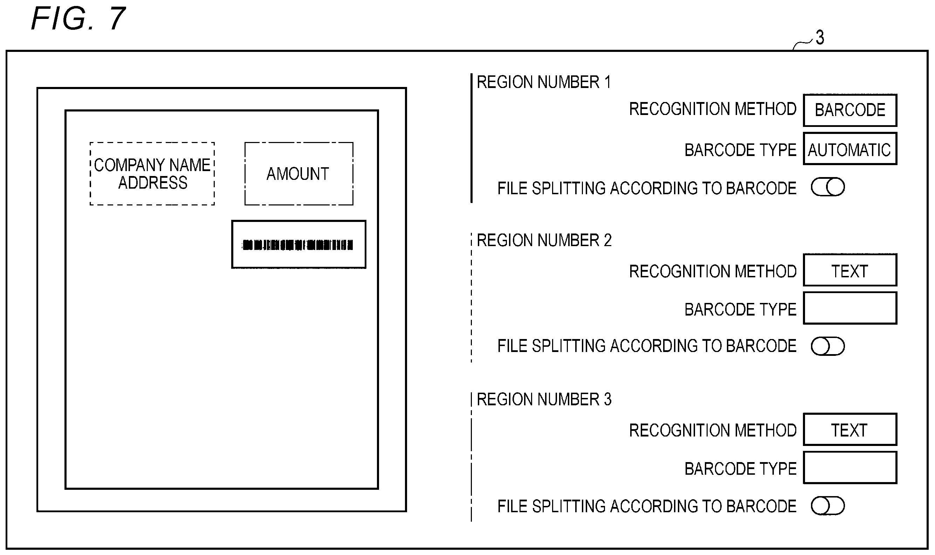

FIG. 7 illustrates a diagram of an example of a setting screen relating to the processing of the information processing apparatus 1 displayed on the terminal 3.

The display device of the terminal 3 displays a setting screen relating to the processing of the information processing apparatus 1.

The setting screen for the processing of the information processing apparatus 1 is a screen on which the administrator is able to input information for setting the processing of the information processing apparatus 1 on the basis of the operation of the input device of the terminal 3 performed by the administrator. The information for setting the processing of the information processing apparatus 1 may include information for setting file splitting. For example, the information for setting file splitting includes information about a specified range for recognizing a barcode, such as "region number 1". The information for setting the processing of the information processing apparatus 1 may include information for setting information extraction. The information for setting information extraction includes information about a specified range for recognizing text, such as the "region number 2" and the "region number 3".

It should be noted that the display of the setting screen for the processing of the information processing apparatus 1 is not limited to the terminal 3. When the administrator uses the multi-function peripheral 2, the display device 221 of the multi-function peripheral 2 is able to display the setting screen for the processing of the information processing apparatus 1.

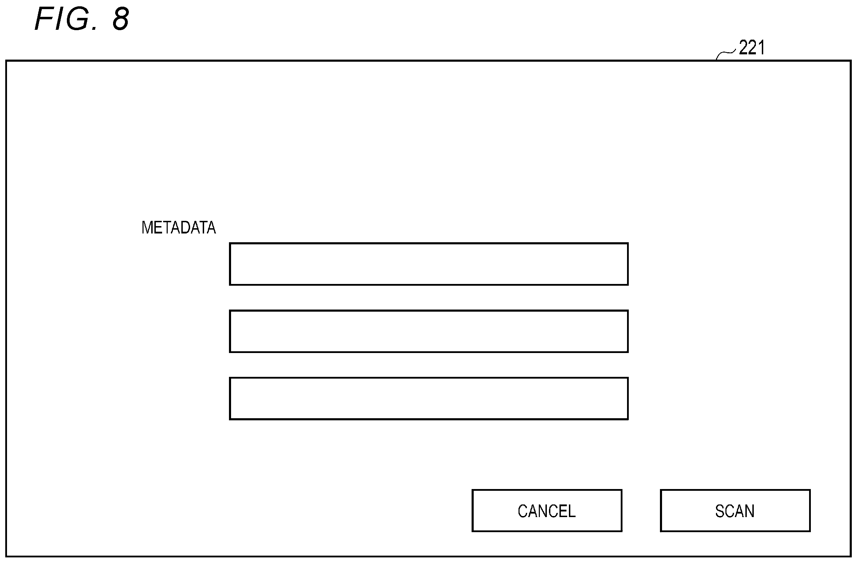

FIG. 8 illustrates a diagram of an example of an input screen for the metadata displayed on the multi-function peripheral 2. The display device 221 of the multi-function peripheral 2 displays the input screen for metadata.

The input screen for metadata is a screen on which the user is able to input metadata on the basis of the operation of the input device 222 performed by the user. If the input method for metadata is a method of inputting text, the user inputs the metadata when transmitting the first electronic file from the multi-function peripheral 2 to the information processing apparatus 1.

The display of the input screen for metadata is not limited to the multi-function peripheral 2. When the user transmits the first electronic file from the terminal 3 to the information processing apparatus 1, the display device of the terminal 3 is able to display the input screen for metadata.

### Processing Example

The processing of the information processing system S will be described. It should be noted that the processing procedure described below is merely an example, and each processing may be modified as much as possible. It should be noted that steps may be appropriately omitted in, replaced in, or added to the processing procedure to be described later in accordance with the embodiment.

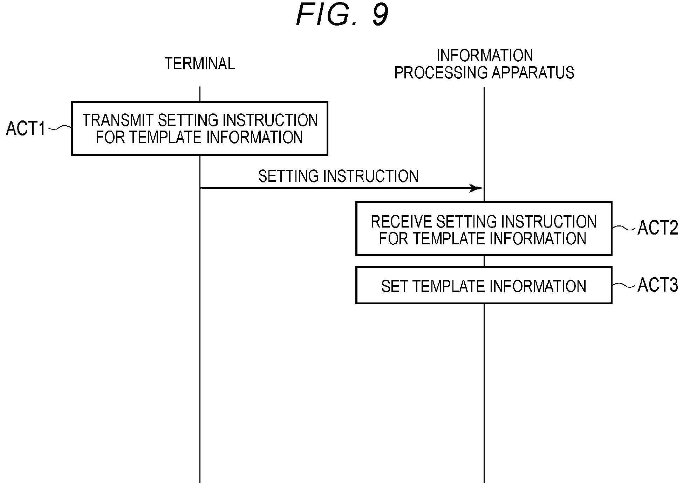

FIG. 9 illustrates a sequence diagram of an example of a setting for the template information. Here, the administrator inputs a setting instruction for the template information on the basis of, or based on, the operation of the input device of the terminal 3. The setting instruction for the template information is an instruction for setting the template information in the information processing apparatus 1. The setting instruction for the template information includes information for setting the template information, which is input on the basis of, or based on, the operation of the input device of the terminal 3 performed by the administrator. The information for setting the template information may include some or all of the information for setting the title information, the information for setting the processing content information, the information for setting the storage save location information, the information for setting the linking information, and the information for setting the input method information. The setting instruction for the template information may include information for setting the processing of the information processing apparatus 1. The information is input based on the operation of the input device of the terminal 3 performed by the administrator.

The terminal 3 transmits a setting instruction for the template information (ACT1). In ACT1, for example, the terminal 3 transmits the template setting instruction to the information processing apparatus 1 via the network NW.

The processing circuit 11 of the information processing apparatus 1 receives the setting instruction for the template information (ACT2). ACT2 may be processing performed by the receiving section 112. In ACT2, for example, the processing circuit 11 receives the setting instruction for the template information from the terminal 3 via the network NW.

The processing circuit 11 of the information processing apparatus 1 sets the template information on the basis of the operation of the input device of the terminal 3 performed by the administrator (ACT3). ACT3 may be processing performed by the setting section 111. In ACT3, for example, the processing circuit 11 sets the template information on the basis of, or based on, information for setting the template information included in the setting instruction of the template information. The processing circuit 11 saves the template information in the template information storage region 131. The setting of the template information is an example of setting some or all of the title information, processing content information, save location information, linking information, and input method information that are associated with each other. The processing circuit 11 sets details of the processing of the information processing apparatus 1 indicated by the processing content information based on information for setting the processing of the information processing apparatus 1 included in the setting instruction of the template information.

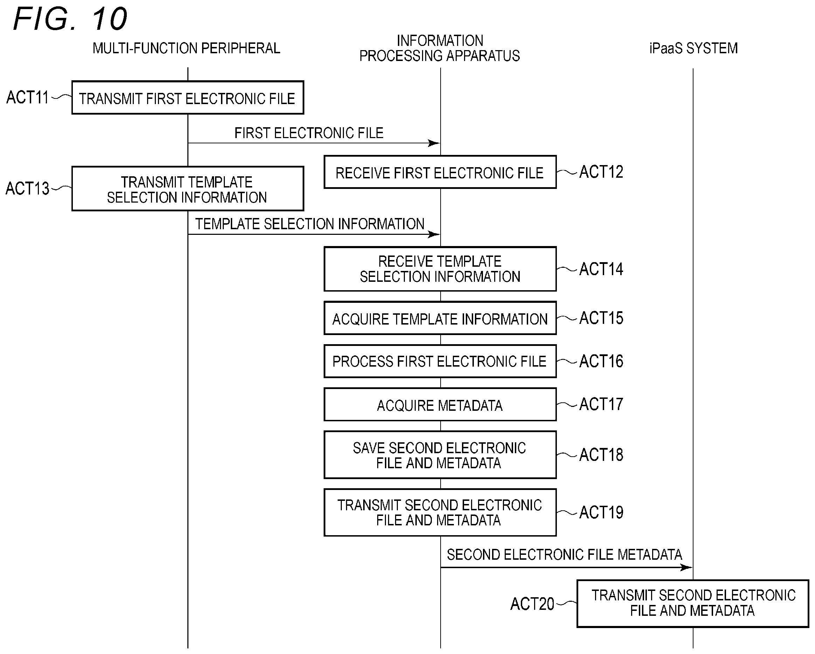

FIG. 10 illustrates a sequence diagram of an example of the processing of the electronic file. Here, the user uploads a first electronic file to the information processing apparatus 1 by using the multi-function peripheral 2. It should be noted that the user may upload the first electronic file to the information processing apparatus 1 using the terminal 3.

The processing circuit 211 of the multi-function peripheral 2 transmits the first electronic file (ACT11). In ACT11, for example, the processing circuit 211 transmits the first electronic file designated by the user to the information processing apparatus 1 via the network NW.

The processing circuit 11 of the information processing apparatus 1 receives the first electronic file (ACT12). ACT12 may be processing performed by the receiving section 112. In ACT12, for example, the processing circuit 11 receives the first electronic file designated by the user from the multi-function peripheral 2 via the network NW.

The processing circuit 211 of the multi-function peripheral 2 transmits the template selection information (ACT13). The template selection information is information capable of identifying one template selected from a plurality of templates according to a workflow in the iPaaS service. The user may refer to the titles of the templates displayed on the display device 221 and select one template from the plurality of templates. In ACT13, for example, the processing circuit 211 transmits template selection information, which is based on the template selection performed by the user, to the information processing apparatus 1 via the network NW.

The processing circuit 11 of the information processing apparatus 1 receives the template selection information (ACT14). ACT14 may be processing performed by the receiving section 112. In ACT14, for example, the processing circuit 11 receives the template selection information from the multi-function peripheral 2 via the network NW.

The processing circuit 11 of the information processing apparatus 1 acquires the template information which is set in the selected template (ACT15). ACT15 may be processing performed by the first acquiring section 115. In ACT15, for example, the processing circuit 11 acquires the template information from the template information storage region 131 on the basis of the template selection information.

Since the template information includes processing content information, acquiring the template information is an example of acquiring the processing content information. The processing content information included in the acquired template information is the processing content information which is set in the selected template. Since the template information includes storage save location information, acquiring the template information is an example of acquiring the storage save location information. The save location information included in the acquired template information is the save location information which is set in the selected template. Since the template information includes the linking information, acquiring the template information is an example of acquiring the linking information. The linking information included in the acquired template information is the linking information which is set in the selected template. Since the template information includes the input method information, acquiring the template information is an example of acquiring the input method information. The input method information included in the acquired template information is the input method information which is set in the selected template.

The processing circuit 11 of the information processing apparatus 1 processes the first electronic file (ACT16). ACT16 may be processing performed by the data processing section 114. In ACT16, for example, the processing circuit 11 executes each processing, which is represented by the processing content information included in the acquired template information, on the first electronic file. The processing circuit 11 executes each processing on the basis of the details of the set processing of the information processing apparatus 1. The processing circuit 11 is able to extract the metadata from the first electronic file by performing information extraction, such as OCR or barcode recognition, on the first electronic file. The processing circuit 11 is able to split the first electronic file into the plurality of second electronic files through the file splitting performed on the first electronic file.

The processing circuit 11 acquires the metadata of each second electronic file (ACT17). ACT17 may be processing performed by the second acquiring section 116. In ACT17, for example, the processing circuit 11 acquires the metadata of the second electronic file on the basis of linking information included in the acquired template information. Acquiring the metadata of the second electronic file on the basis of the linking information includes acquiring the metadata of the second electronic file for each universal data on the basis of the linking information. In such a case, the processing circuit 11 acquires the metadata of the second electronic file for the type of metadata linked to the universal data in the linking information for each universal data. The metadata of the second electronic file acquired by the processing circuit 11 is metadata corresponding to the type of metadata linked to the universal data in the linking information.

A method of acquiring the metadata of the second electronic file will be described. In one example, the processing circuit 11 is able to acquire metadata extracted from the electronic file as the metadata of the second electronic file. In the present example, the processing circuit 11 may acquire metadata extracted from the first electronic file through the information extraction as the metadata of the second electronic file. The processing circuit 11 may acquire the metadata extracted from the second electronic file generated on the basis of, or based on, the first electronic file through conversion such as image processing as the metadata of the second electronic file. In another example, the processing circuit 11 is able to receive the metadata from the multi-function peripheral 2 via the network NW and acquire the received metadata as the metadata of the second electronic file. The metadata transmitted from the multi-function peripheral 2 to the information processing apparatus 1 is metadata which is input in the multi-function peripheral 2 on the basis of, or based on, an input operation performed by the user using the input device 222 (e.g., based on a received input from the user, etc.). The processing circuit 11 may acquire the metadata of the second electronic file which is input by the input method represented by the input method information included in the acquired template information.

The processing circuit 11 saves (e.g., stores, etc.) the second electronic file and the metadata of the second electronic file in the electronic file storage region 132 (ACT18). ACT18 may be processing performed by the save processing section 117. In ACT18, for example, the processing circuit 11 saves the second electronic file and the metadata of the second electronic file in a storage save location, which is represented by the acquired storage save location information, in the electronic file storage region 132. The metadata of the second electronic file is linked to each universal data. The metadata of the second electronic file is metadata corresponding to the type of metadata linked to the universal data in the linking information.

The processing circuit 11 transmits the second electronic file and the metadata of the second electronic file on the basis of the acquired linking information (ACT19). ACT19 may be processing performed by the transmission or transmitting section 113. In ACT19, for example, the processing circuit 11 transmits the second electronic file and the metadata of the second electronic file to the iPaaS system 4 via the network NW. Transmitting the metadata of the second electronic file on the basis of, or based on, the linking information includes transmitting the metadata of the second electronic file for each universal data on the basis of the linking information. In such a case, the processing circuit 11 transmits the metadata of the second electronic file for each universal data in link with the universal data. The processing circuit 11 transmits the metadata of the second electronic file for the type of metadata linked to the universal data in the linking information for each universal data. The metadata of the second electronic file transmitted by the processing circuit 11 is metadata corresponding to the type of metadata linked to the universal data in the linking information.

The iPaaS system 4 receives the second electronic file and the metadata of the second electronic file (ACT20). In ACT20, for example, the iPaaS system 4 receives the second electronic file and the metadata of the second electronic file from the information processing apparatus 1 via the network NW. The iPaaS system 4 executes the workflow linked to the selected template by using the second electronic file and the metadata of the second electronic file.

Here, the iPaaS system 4 holds information about the linking between the workflow and the template in the iPaaS service. The information includes information that represents a template linked to each workflow in the iPaaS service. With the information, the iPaaS system 4 is able to give a link as to which workflow starts operating when receiving the first electronic file by using a certain template in the information processing apparatus 1.

In one example, the iPaaS system 4 executes polling to periodically transmit an inquiry as to whether the electronic file is uploaded. In response to the inquiry, the processing circuit 11 of the information processing apparatus 1 transmits the second electronic file and the metadata of the second electronic file.

In another example, the iPaaS system 4 transmits a communication for subscribing to each template of the information processing apparatus 1. The communication includes a destination URL. When receiving the first electronic file in the template, the processing circuit 11 of the information processing apparatus 1 transmits the second electronic file and the metadata of the second electronic file to the save location URL corresponding to the template. The example is a Webhook method.

In ACT15, the processing circuit 11 acquires the template information on the basis of the template selection information, but is not limited thereto. The processing circuit 11 may acquire the template information of the template appropriate for the first electronic file without requiring the template selection information. In the present example, the processing circuit 11 selects the template for the first electronic file based on the information extracted from the first electronic file. The processing circuit 11 acquires the template information of the template selected for the first electronic file. Thereby, the user does not need to select the template when uploading the first electronic file.

As described above, the information processing apparatus 1 is able to transmit the second electronic file and the metadata of the second electronic file on the basis of the linking information. The linking information is information about the linking between the type of metadata and the universal data defined in the iPaaS service. Therefore, the information processing apparatus 1 is able to transmit metadata necessary for the workflow in the iPaaS service to the iPaaS service on the basis of the linking information.

As described above, the information processing apparatus 1 is able to transmit the metadata of the second electronic file for the universal data defined in the iPaaS service on the basis of the linking information. The metadata for the universal data defined in the iPaaS service is metadata necessary for the workflow in the iPaaS service. Therefore, the information processing apparatus 1 is able to transmit the metadata necessary for the workflow in the iPaaS service to the iPaaS service.

As described above, the information processing apparatus 1 is able to transmit the metadata of the second electronic file in a link with the universal data.

Thereby, the information processing apparatus 1 is able to transmit the metadata of the second electronic file in the format that is easy to be used in the iPaaS service.

As described above, the information processing apparatus 1 is able to transmit the metadata of the second electronic file for the type of metadata linked to the universal data in the linking information. Thereby, the information processing apparatus 1 is able to transmit the metadata of the second electronic file limited to the metadata necessary for the workflow in the iPaaS service.

As described above, the information processing apparatus 1 is able to, or configured to, acquire, in a similar manner as acquiring the metadata of the second electronic file, metadata which is input by an apparatus different from the information processing apparatus 1 an based on or associated with the input operation performed by the user.

Thereby, the information processing apparatus 1 is able to acquire the metadata without requiring processing of extracting the metadata from the electronic file.

As described above, the information processing apparatus 1 is able to transmit the second electronic file and the metadata of the second electronic file on the basis of the linking information which is set in the selected template.

Thereby, the information processing apparatus 1 is able to appropriately transmit the required metadata that may differ for each workflow in the iPaaS service.

As described above, the information processing apparatus 1 is able to set the linking information on the basis of the operation.

In such a manner, in order to transmit the metadata necessary for the workflow in the iPaaS service to the iPaaS service, the linking information may be set. Therefore, in the iPaaS service, it is not necessary to define metadata necessary in the iPaaS service for each workflow.

### Other embodiments

In the above-mentioned embodiments, the information processing apparatus 1 is described as an apparatus that implements a file transfer service, but is not limited thereto. The information processing apparatus 1 may be an apparatus that implements a service different from the file transfer service.

In the above-mentioned embodiments, the iPaaS service is described as an example of an external service, but is not limited thereto. The external service may be a service that processes the second electronic file.

In the above-mentioned embodiments, description is given of an example in which the storage 13 of the information processing apparatus 1 includes the template information storage region 131 and the electronic file storage region 132, but the storage 13 is not limited thereto. A storage of an apparatus different from the information processing apparatus 1 may include the template information storage region 131 and the electronic file storage region 132.

The sections implemented by the processing circuit 11 described in the above-mentioned embodiment are not limited to being implemented by one device such as the information processing apparatus 1. The sections may be implemented to be distributed into a plurality of apparatuses. In such a case, a collection of the plurality of apparatuses is an example of the information processing apparatus.

The above-mentioned embodiment may be applied to a method executed by one or more apparatuses. The above-mentioned embodiment may be applied to a program capable of causing a computer of one or more apparatuses to execute each function. The above-mentioned embodiment may be applied to a recording medium storing the program.

Each of one or more circuits constituting the processing circuit executes one or more processing operations among the plurality of processing operations. When the processing circuit is configured with a single circuit, the single circuit executes all of the plurality of processing operations. When the processing circuit is configured with a plurality of circuits, each of the plurality of circuits executes some of the plurality of processing operations. Some of the plurality of processing operations may be one of the plurality of processing operations, or may be two or more of the plurality of processing operations. When the processing circuit is configured with a plurality of circuits, the plurality of circuits may be included in one device, or may be distributed into a plurality of apparatuses.

The program may be provided in a state where the program is stored in the apparatus according to the embodiment, or may be provided in a state where the program is not stored in the apparatus. In the latter case, the program may be provided via a network, or may be provided in a state where the program is recorded on a recording medium. The recording medium is a non-transitory medium. The recording medium is a computer-readable medium. Any type of recording medium may be used as long as the recording medium is capable of storing a program and is readable by a computer, such as a CD-ROM or a memory card.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the framework of the disclosure. The accompanying claims and their equivalents are intended to cover such forms or modifications as would fall within the scope of the disclosure.

The several embodiments described above may be expressed as follows.
(1) An information processing apparatus including:
   a receiving section configured to receive a first electronic file;
   an acquiring section configured to acquire metadata of a second electronic file, which is an electronic file the same as the first electronic file or an electronic file generated on the basis of the first electronic file; and
   a transmitting section configured to transmit the second electronic file and the metadata of the second electronic file on the basis of information about linking between a type of the metadata and data defined in an external service.
(2) The information processing apparatus according to (1), wherein the transmission section transmits the metadata of the second electronic file for the type linked to data defined in the external service in the information about the linking.
(3) The information processing apparatus according to (1) or (2), wherein the transmitting section transmits the metadata of the second electronic file by linking the metadata to the data defined in the external service.
(4) The information processing apparatus according to any of (1) to (3), wherein the acquiring section acquires, as the metadata of the second electronic file, metadata which is input by an apparatus different from the information processing apparatus on the basis of an input operation performed by a user.
(5) The information processing apparatus according to any of (1) to (4), wherein the transmitting section transmits the second electronic file and the metadata of the second electronic file on the basis of information about the linking which is set in a template selected from a plurality of templates according to processing of the external service for the second electronic file.
(6) The information processing apparatus according to any of (1) to (5), further comprising
   a setting section configured to set the information about the linking on the basis of an operation.
(7) A program capable of causing a computer to execute:
   a function of receiving a first electronic file;
   a function of acquiring metadata of a second electronic file, which is an electronic file the same as the first electronic file or an electronic file generated on the basis of the first electronic file; and
   a function of transmitting the second electronic file and the metadata of the second electronic file on the basis of information about linking between a type of the metadata and data defined in an external service.

## Claims

1. An information processing apparatus comprising:
a processor configured to
receive a first electronic file;
acquire metadata of a second electronic file, the second electronic file being the same as the first electronic file or being a file generated based on the first electronic file; and
transmit the second electronic file and the metadata of the second electronic file based on information associated with linking a type of the metadata and data defined in an external service.

2. The information processing apparatus according to claim 1, wherein the processor is configured to transmit the metadata of the second electronic file by linking the metadata to the data defined in the external service.

3. The information processing apparatus according to any one of claims 1 or 2, wherein the processor is further configured to acquire metadata input by an apparatus different from the information processing apparatus based on an input operation performed by a user.

4. The information processing apparatus according to any one of claims 1 to 3, wherein the processor is configured to transmit the second electronic file and the metadata of the second electronic file based on information associated with the linking, the information associated with the linking being set in a template selected from a plurality of templates by a user.

5. The information processing apparatus according to claim 4,wherein the processor acquires the template by first acquiring processing, and the processor is further configured to acquire the metadata by second acquiring processing, and
wherein the information processing apparatus is configured to select a template for the first electronic file based on the information extracted from the first electronic file.

6. The information processing apparatus according to any one of claims 4 or 5, wherein the information associated with the linking set in each of the templates is different from the information associated with the linking set in another one of the templates.

7. The information processing apparatus according to any one of claims 1 to 6, wherein the data defined in the external service is universal data, and the information associated with the linking includes information that represents the type of metadata to be linked to the universal data.

8. The information processing apparatus according to any one of claims 1 to 7, wherein the processor is configured to set the information associated with the linking based on an operation.

9. An information processing method according to any one of claims 1 to 8 comprising:
receiving, by a receiver, a first electronic file;
acquiring metadata of a second electronic file, the second electronic file being the same as the first electronic file or an electronic file generated based on the first electronic file; and
transmitting, by a transmitter, the second electronic file and the metadata of the second electronic file based on information associated with a linking between a type of the metadata and data defined in an external service.

10. The information processing method according to claim 9, transmitting, by the transmitter, the metadata of the second electronic file by linking the metadata to the data defined in the external service.

11. The information processing method according to any one of claims 9 or 10, further comprising acquiring metadata input by an apparatus different from an information processing apparatus based on an input operation performed by a user.

12. The information processing method according to any one of claims 9 to 11, further comprising transmitting, by the transmitter, the second electronic file and the metadata of the second electronic file based on information associated with the linking, the linking being set in a template selected from a plurality of templates by a user.

13. The information processing method according to claim 12, further comprising, acquiring the template selected from the plurality of templates.

14. The information processing method of claim 12, wherein the linking information set in each of the templates is different from the linking information set in another one of the templates.

15. An information processing system comprising:
a multi-function peripheral comprising a scanner configured to scan a first electronic file, and
a terminal configured to transmit at least one of the first electronic file or an input from a user; and
an information processing apparatus according to any of claims 1 to 8, the processor of the information processing apparatus being configured to:
receive the first electronic file from the multi-function peripheral,
acquire metadata of a second electronic file, the second electronic file being the same as the first electronic file or being a file generated based on the first electronic file and acquire the input, and
transmit the second electronic file and the metadata of the second electronic file based on information associated with linking a type of the metadata and data defined in an external service.
